# EUROPEAN PATENT APPLICATION

(11) **EP 2 045 213 A1**
(43) Date of publication of application: **08.04.2009**
(21) Application number: 07019469.1
(22) Date of filing: 04.10.2007
(51) Int. Cl.: C01B 31/02, H01M 4/58, H01M 10/40, H01G 9/155

(54) **Assembly of nanotube encapsulated nanofibers nanostructure materials**

(71) Applicant: Max-Planck-Gesellschaft zur Förderung der Wissenschaften e.V., 80539 München (DE)
(72) Inventor: The designation of the inventor has not yet been filed
(74) Representative: Weiss, Wolfgang

(57) **Abstract**

CNT encapsulated carbon nanofibers (CNFs @ CNTs) having a one-dimensional structure are provided by selective assembling CNFs inside the channel of CNTs via impregnation of catalyst inside CNTs and subsequent chemical vapour deposition of hydrocarbon. The new structure is used as material for energy storage.

## Description

The present invention relates to a method for producing carbon nanotube encapsulated carbon nanofibers (CNFs @ CNTs) nanostructure materials with one-dimensional structure, the products obtained thereby and the use thereof.

Carbon nanotubes (CNTs) are nanosized cylindrical structures made of carbon. CNTs are classified in single-walled carbon nanotubes (SWNT) and multi-walled carbon nanotubes (MWNT). A single-walled carbon nanotube is a one atom thick sheet of graphite rolled up into a seamless cylinder with diameters in the order of several nanometers. In contrast, multi-walled carbon nanotubes consist of multiple layers of graphite that are arranged in concentric cylinders. CNTs having various dimensions are commercially available in large amounts and at reasonable prices.

Since the discovery of CNTs also carbon nanofibers (CNFs) have attracted not only scientific researchers, but also industry due to their wide possibilities of applications. The term "carbon nanofiber" summarizes a large family of different filamentous nanocarbons. They can be distinguished according to the arrangement of the graphene layers, e.g. "platelet-like" or "fishbone" like substructures. CNFs with graphene layers wrapped in perfect cylinder form are CNTs.

Carbon nanofibers may be prepared via catalytic decomposition of hydrocarbons. Pham-Huu et al. (Phys. Chem. Chem. Phys. 2002, 4, 514-521) report on the synthesis of uniform carbon nanofibers by catalytic decomposition of ethane over a nickel catalyst supported on carbon nanotubes via a catalytic chemical vapour deposition process. Since the nickel catalyst is exclusively located on the outer wall of the carbon nanotubes carbon nanofibers are formed around the CNT catalyst support. The obtained nanotube-supported nanofibers may be employed as catalyst support due to their high external surface area.

Liu et al. (Carbon 43 (2005) 1557-1583) describe the preparation of carbon nanocoils using activated carbon nanotubes as catalyst support. Nickel particles having a diameter of about 800 nm are deposited on activated carbon nanotubes. Catalytical chemical vapour deposition using ethylene has been performed to obtain carbon microcoils attached to the activated carbon nanotubes. Due to the dimension of the nickel particles compared to the cavity of the CNT catalyst support formation of carbon coils within the cavity of the carbon nanotube can be excluded. The materials obtained are suggested to be used as support in catalytic reactions.

A similar process for producing carbon nanofibers on nickel modified carbon nanotubes via a catalytical vapour deposition process is descibed by Liu et al. (Journal of Molecular Catalysis A; Chemical 230 (2005) 17-22).

Carbon nanofilaments, especially carbon nanotubes, have been suggested as a potential material to incorporate various compounds such as gases, ions, molecules, catalysts, etc. since the nanochannel inside of CNTs offers enough space to accommodate them.

The unique one-dimensional tubular structure of CNTs, their high electrical conductivity and large surface area are promising features for highly efficient storage properties.

Liu et al. (J. Phys. D: Apl. Phys. 38 (2005) R231-R252) give a review about the possibility of storing gases and ions, e.g. lithium ions or hydrogen, in several types of carbon nanostructures. Single-walled or multi-walled carbon nanotubes as well as carbon nanofibers and carbon microcoils (CMC) are capable of storing these compounds in sufficient amounts. This effect is mainly ascribed to the unique pore structure of the nanocarbon materials. In case of carbon nanotubes, the total pore volume is composed of firstly the hollow nanochannel of the carbon nanotubes, secondly the interstitual pores that are formed by aggregation of the carbon nanotubes into bundles and thirdly, in case of multi-walled carbon nanotubes, the interlayer space between the coaxial cylindrical carbon layers.

However, there are some disadvantages using pristine CNTs as storing medium since the specific storage capacity (i.e. the amount of stored compounds per gram CNT) is limited due to the presence of the relatively large internal channel. Besides, with respect to the electrical properties of CNTs, it would be desirable to increase the specific capacity (i.e. the capacity per gram CNT) that is limited by the theoretical maximum capacity of the graphite structure.

Several attempts have been made to modify pristine carbon nanotubes in order to overcome the above-mentioned disadvantages.

Selective assembling foreign carbon atoms or heteroatoms into CNTs could controllably improve the spatial occupancy inside CNT channels, which provides a potential way to optimize its porosity for uses in gas adsorption, heavy metal ions removal and energy storage. Although carbon hybrids with chemical continuity in nanostructure are extremely interesting from the viewpoint of fundamental sciences, it has still not found vast practical applications of them.

EP-A-1 591 418 describes a carbon tube-in-tube (CTIT) nanostructure material, wherein a tube with a higher average diameter compared to the pristine CNT and/or a tube with a lower average diameter compared to the pristine CNT is formed coaxially to the pristine CNT via a self-assembly process. The obtained highly ordered CTITs are suggested to be used as a catalyst support, electrode material for gas storage or as templates for the assembly of heterostructures.

Wang et al. (Angew. Chem. Int. 2006, 45, 7039-7042) report on bimetallic tin-antimony (Sn-Sb) nanorods in carbon nanotubes. The nanorods show a coaxially integrated core-shell structure that consists of an Sn-Sb core and a CNT shell. The obtained material is used as an electrode in lithium ion batteries and exhibits high capacity and good cyclability. However, use of the Sn-Sb nanorods in higher temperature applications is not possible due to the low melting point of the Sn-Sb core material.

Wang et al. (Adv. Mater. 2006, 18, 645-649) disclose SnO₂ nanotubes with coaxially grown carbon nanotubes overlayers. Herein, the porous SnO₂ cylinder is formed first and a uniform carbonaceous overlayer is grown on the external surface of the SnO₂ nanotube to form a carbon nanotube encapsulated SnO₂ naonotube. The obtained material is used as an anode material in a working lithium ion battery and shows a good cyclability and specific capacity. However, synthesis of SnO₂ nanotube starting materials is a costly multi-step process involving templates.

Luzzi et al. (Carbon 38 (2000) 1751-1756) disclose the manufacture of carbon C₆₀-cage structures within single-walled carbon nanotubes. The cage structures internal to the SWNTs are found to be C₆₀ fullerenes resembling nanoscopic peapods. Fullerenes have a regular spherical carbon structure. The fullerenes are separated from the tube by 0.3 nm at the closest point. The peapods are found to coalesce into capsules and interior tubes under prolonged exposure to an electron beam, whereby the inner tubes are coaxially aligned to the inner wall of the carbon nanotube. It was shown that carbon nanopeapods described above conceivably exhibit unusual electronic and mechanical properties compared with those of empty nanotubes (B. W. Smith et al. Nature 396,323 (1998), J. Sloan et al, Chem. Comm. 2002, 1319 (2002), I. V. Krive et al., Low Temp. Phys. 32, 887 (2006), J. W. Kang et al., Nanotech. 15, 1825 (2004), L. Kavan et al., Carbon 42, 1011 (2004)).

Lithium-ion rechargeable batteries are one of the greatest successes of modern electrochemistry. Their applications are not only for consumer electronics but, most importantly, for green energy storage and potential use in hybrid electric vehicles (M. Endo et al. Carbon 38, 183 (2000): I. Maier, Nature Mater. 4, 805 (2005): A. S. Arico et al., Nature Mater. 4, 366 (2005)).

Carbon as a richly available and low-cost resource is a promising negative electrode material for lithium secondary batteries. However, along with the commercial success of Li-ion batteries, the limits in performance of the current synthetic/natural graphite electrode materials have been reached.

The next-generation of Li-ion-battery electrodes is expected to have a higher reversible capacity as well as superior cycling stability (cyclability). Rapid development of carbon nanofilaments provides new opportunities also in Li-ion-battery elecrodes technology (see above and A. Oberlin et al. J. Cryst. Growth 32, 335 (1976); S. lijima, Nature 354, 56 (1991); Y. Zhang et al. Science 285, 1719 (1999)).

However, it is still a huge challenge to achieve a long-time stability with a high reversible capacity. For example, high-surface-area CNTs have always a high reversible capacity of 400-600 mAh/g but a weak stability even after various surface modifications (G. T. Wu et al. J. Electrochem. Soc. 146, 1696 (1999); S. H. Ng et al. Electrochimica Acta 51, 23 (2005); R. S. Morris et al. J. Power Sources 138, 277 (2004): Y. A. Kim et al. Small 2, 667 (2006): J. M. Rosolen et al. J. Power Sources 162, 620 (2006); M.-S. Park et al. Chem. Mater. 19, 2406 (2007)).

Moreover, the size of a portable lithium battery is strictly limited, since commercial CNT products always possess a loose and fluffy macroscopic structure and thus low bulk density. Novel CNTs-based electrodes with a spatially compact structure are expected to provide favorable storage capacity.

In view of the above-mentioned situation it is necessary to provide a method for the preparation of carbon nanostructure materials having improved specific electrical (reversible) capacity, specific storage capacity and/or specific bulk density in a simple and cost-effective way.

This problem is solved by the present invention by providing a method for producing carbon nanotube encapsulated carbon nanofibers (CNFs @ CNTs).

It was surprisingly found that deposition of catalytically active substances inside the channels of carbon nanotubes and following conversion of carbon-containing compounds on the surface of the catalytically active substances leads to carbon nanofibers assembled in the interior of the CNT material.

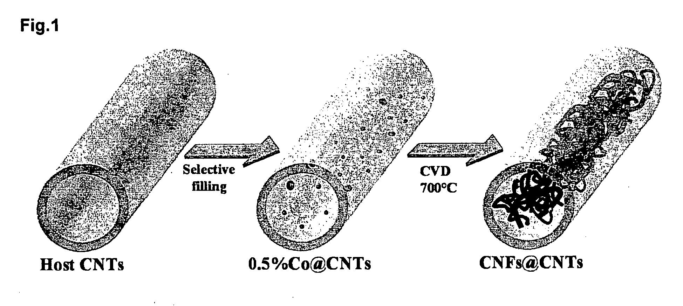

In a preferred embodiment of the invention, the strategy for producing CNFs @CNTs is based on a three-step procedure (Fig. 1). First, a carbon nanotube starting material is provided. This material may be subjected to a functionalization procedure, e.g. by an HNO₃-based oxidation at defective sites, a process previously used to purify, cut or open nanotubes. The oxidation concomitantly functionalizes the walls of carbon nanotubes with chemically reactive groups, e.g. carboxyl and/or hydroxyl groups. The functionalization renders the carbon nanotubes starting material hydrophilically. Secondly, a catalytically active substance, such as metallic cobalt, is deposited inside the channels of the CNT starting material. Thirdly, the catalyst-modified carbon nanotubes are contacted with carbon-containing compounds, such as unsaturated hydrocarbons, e.g. ethyne or ethene, that are converted to carbon nanofibers at the active sites of the catalysts.

Thus, the present invention relates to a method for producing carbon nanotube encapsulated carbon nanofibers nanostructure material comprising the steps
a) providing a carbon nanotube (CNT) starting material,
b) optionally subjecting the CNT material to a functionalization procedure, wherein a CNT starting material having chemically reactive groups is obtained,
c) depositing at least one catalytically active substance in the interior of the CNT material from step a) or b), wherein a catalyst-modified CNT material is obtained,
d) contacting the catalyst-modified CNTs from step c) with at least one carbon-containing compound, wherein carbon nanofibers are formed in the interior of the CNT material,
e) optionally subjecting the material obtained in step d) to a thermal treatment and
f) optionally purifying the material obtained in step d) or e).

The starting materials for the method of the invention are carbon nanotubes (CNTs). Carbon nanotubes may be present in the process as single-walled carbon nanotubes (SWNT) and/or multi-walled carbon nanotubes (MWNT).

Preferably, the CNT starting material of the present invention comprises multi-walled carbon nanotubes. The nanotubes have an average inner diameter of about 10 to 150 nm and preferably from 20 to 80 nm. The outer diameter of the carbon nanotubes starting material is of about 15 to 300 nm, preferably of about 50 to 200 nm. Usually the average length of the CNT starting material is of about 0.2 to 50 µm, preferably of about 2-50 µm, more preferably of about 20 µm. The commercial CNTs used have preferably a substantially opening characteristic, i.e. at least 25% of CNTs are open, what allows both the catalytically active substance and the carbon containing compound to be easily diffused into the tubular channel. The CNT starting material may be an as-synthesized sample, which has not been subjected to any purification procedure. The content of impurities may be from about 0.2% to about 7% based on the weight of the total CNT starting material.

Preferably, the first step according to the method of the present invention is a functionalization procedure that comprises an oxidation, wherein CNT walls having hydroxyl and/or carboxyl groups are formed. Preferably, the oxidation comprises heating the CNT starting material with HNO₃ or HNO₃ /H₂SO₄.

For example, the oxidation comprises treatment with concentrated HNO₃ at about 90-130°C for about 30 min to about 48 hours. In another embodiment the functionalization procedure comprises treatment with a solution of HNO₃ and H₂SO₄, wherein the volume ratio of HNO₃ to H₂SO₄ is preferably 0.2-5:1. The as-treated nanotubes are subsequently dried at 80-100°C for about 1-15 hours.

The hydroxyl and/or carboxyl groups formed during the functionalization procedure render the walls of the CNTs hydrophilically and thus, establish improved conditions for the incipient wetness impregnation procedure (see below).

The second step of the invention further comprises depositing catalytically active substances inside, preferably selectively inside, the channels of the CNT material obtained in the first step.

The catalytically active substance comprises metals, alloys or metal compounds, preferably transition metals, alkaline metals or alkaline earth metals and/or alloys thereof and/or compounds thereof, more preferably iron, nickel, cobalt and/or alloys thereof and/or compounds thereof. The metals, alloys or compounds may be present in elemental form, as oxides or salts.

For the incorporation of the catalytically active substance inside the channels of the hydrophilic carbon nanotubes, the catalytically active substances or precursors thereof, such as soluble metal salts or gaseous metal complexes, are preferably contacted with the hydrophilic carbon nanotubes in a suitable fluidic, e.g. liquid and/or gaseous, medium (water, ethanol, supercritical CO₂, etc.) under suitable deposition conditions. The precursors are preferably salts selected from the group consisting of halides, nitrates or sulfates of the catalytically active metals mentioned above.

In order to achieve a selective deposition of the catalytically active substances or precursors thereof in the inner channel of the CNT tube, the volume of a fluidic medium containing the catalytically active substance or the precursor thereof corresponds to the volume of the inner channel of the carbon nanotubes. This "modified incipient wetness impregnation" procedure assures that the fluidic medium comprising catalytically active substances or precursors thereof selectively flows into the inner channel of the host CNTs driven by capillary forces. Since no more fluidic medium is available than that filling up the nanotube channels, deposition of the catalytically active substance on the outer surfaces of the carbon nanotubes can be avoided.

Following, the obtained material may be dried at about 80-120°C, preferably at about 100°C, for about 1-18 hours, preferably for about 10 h, and calcined under suitable conditions at 200-800°C, preferably at about 350°C, for about 1-6 hours, preferably for about 2 hours, in an inert gas environment, such as He, Ar, N₂, or in air.

In case a precursor of the catalytically active substance is used any suitable reaction may be conducted in order to obtain the catalytically active species. For example, the precursor may be reduced, oxidized, heated, or activated with suitable reagents.

An effective amount of the catalytically active substance, e.g. about 0.001-7%, preferably about 0.1-5%, more preferably about 0.5% based on the total weight of the carbon nanotubes is deposited. It is obvious for one skilled in the art that the effective amount of catalytically active substance depends from the reaction conditions, the respective catalyst material as well from the carbon containing compound used in step d) (see below).

The catalytical active substance may be deposited in form of discrete catalyst agglomerates, preferably in form of catalyst nanoparticles having an average diameter of about 1-10 nm, preferably from about 2-7 nm.

Prior to step d) the catalyst-modified CNTs from step c) can be pre-treated at elevated temperatures under reducing conditions. Surprisingly it has been found that such a pre-treatment improves the activity of the catalyst. Suitable activation comprises treating the modified CNTs at temperatures of up to about 350°C, preferably of up to about 700°C in a reducing gas/inert gas atmosphere. The reducing gas may be hydrogen or ammonia or carbon monoxide. The volume ratio of reducing gas/inert gas (N₂, He, Ar) is preferably of about 1:1 to 1:3.

In the following step d) the CNTs obtained in step c) are contacted with at least one carbon-containing compound, which is capable of decomposing and forming carbon nanofibers in the presence of the catalyst in order to obtain carbon nanotube encapsulated carbon fibers.

Preferably, the carbon nanotube encapsulated carbon fibers (CNFs @ CNTs) are prepared via a catalytic chemical vapour deposition process (CCVD).

Catalytic chemical vapour deposition (CCVD) is well-known in the art and comprises the deposition of a solid phase component from a gas phase onto the surface of a substrate due to a catalytic reaction.

Carbon-containing compounds are preferably deposited from the gas phase. The compounds are preferably gaseous carbon-containing compounds selected from the group consisting of saturated and/or unsaturated, optionally substituted, hydrocarbons, such as ethane, CH₃Cl, ethylene, and/or ethyne, but also CO may be used.

Deposition of CNFs preferably is adjacent to the catalyst nanoparticles.

Preferably the carbon-containing compound is contacted with the catalyst-modified carbon nanotubes at elevated temperatures of up to 700 °C, preferably from about 200-500°C, more preferably from about 350-480°C. In a specific embodiment the carbon-containing compound is introduced to the CNTs via a constant flow.

The carbon containing compound may be present in dilution with an inert and/or reducing gaseous atmosphere. The inert gas may be e.g. a noble gas or nitrogen, whereas the reducing gas may be e.g. hydrogen or suitable non-carbon containing reducing gases. It has been found, that the CCVD conducted under reducing atmosphere leads to better CNF yields. The reducing gas/inert gas mixture may be the same used in the pre-treatment step (see above). The volume ratio of carbon containing compound/gas mixture is preferably 1:1. The ratio of the carbon-containing compound to the catalyst material can vary from 0.2 to about 10 l/g depending from the type of catalyst and the carbon-containing compounds used. The duration of the CCVD process is dependent from the compound, the catalyst, the flow rate etc. and is preferably in the range of 5 min to 2 hours, more preferably 5-20 min..

After the CCVD process, the reaction product is allowed to cool down to room temperature, preferably in an inert gas atmosphere, such as helium, argon or nitrogen.

The carbon nanofiber formed in step has a crimped morphology. A "crimped morphology" means that the CNF may be curved or curled, preferably the CNF is in the form of a random coil as known from peptides and polymers (see e.g. Flory, P.J. (1969) Statistical Mechanics of Chain Molecules, Wiley). The surface of the CNF may be smooth or rough.

Preferably the individual CNFs are randomly arranged to each other. Thus, there are substantially no structural domains of systematically arranged CNFs.

The carbon nanofibers according to the invention are hollow and may be open and/or closed. Preferably, the carbon nanofibers are open since the specific surface of the carbon nanotube encapsulated carbon nanofibers is increased even more in this case.

The carbon nanofibers have an average outer diameter of about 2-20 nm, preferably of about 5-15 nm, more preferably of about 8-12 nm and even more preferably of about 10 nm. The average inner diameter of the carbon nanofibers is of about 0.5 to 15 nm, preferably of about 1 nm to 10 nm.

The carbon nanofibers according to the invention have a length of about 100-1000 nm, preferably of about 150-250 nm, more preferably of about 200 nm.

Thus, the aspect ratio of the CNFs, i.e. the ratio of length to the outer diameter is preferably more than about 2, preferably more than about 10 and even more preferably more than about 20.

The ratio of the inner diameter of the CNT material to the outer diameter of the carbon nanofibers lies in the range of from about 1 to 50, preferably from about 2 to 15.

The CNFs are selectively located within the channel of the carbon nanotubes, i.e. substantially none of the nanofibers are attached to the outer wall of the CNTs. Moreover, the nanofibers located at the tip of the nanotubes may be flush with the tip of the nanotube. Thus, substantially no CNFs protrude from the pristine CNTs. Said morphology assures an improved bulk density of the inventive CNFs @ CNTs due to the absence of any fluffy attachments outside the carbon nanotubes.

Surprisingly it was found that the CNFs do not show any preferred orientation with respect to the inner channel of the carbon nanotube, i.e. the linear CNT shape does not induce any directed growth of the CNFs. Preferably, the CNFs are randomly arranged within the interior of the CNT starting material. Thus, the CNFs are not coaxially or co-parallel oriented with repect to the longitudinal axis of the pristine CNT.

Step e) of the method according to the invention comprises a thermal treatment. The thermal treatment is preferably carried out by heating the carbon nanotube encapsulated carbon nanofibers obtained in step d) at temperatures of 800°C or higher, preferably of at least 1000°C to 2800°C preferably in an inert, e.g. N₂, argon or noble gas, atmosphere. The thermal treatment may lead to a structural condensation and/or improvement of the nanostructure.

The obtained products may optionally subjected to a purification step f), preferably in order to remove residual catalyst traces introduced in step c). Therefor, the CNFs @ CNTs are contacted with reagents capable of removing remaining catalyst traces from the obtained products. One skilled in the art is able to choose suitable agents depending from the type of catalyst used in step c). Examples are nitric acid, sulfuric acid or a combination thereof, but are not limited thereto.

The carbon nanotube encapsulated carbon nanofibers are preferably characterised by a CNF/CNT weight ratio of about 10 to 60% by weight preferably of about 15 to 30%. The amount of carbon nanofibers in CNFs @ CNTs can be calculated from the increase in weight after step d), since it has been found by spectroscopical analysis that the weight increase during step d) of the inventive method is substantially assigned to the formation of carbon nanofibers.

In a preferred embodiment at least 10, preferably 15 to 90% and more preferably 20 to 70% by volume of the volume of the inner channel of the CNT may be occupied by carbon nanofibers.

The specific surface area of the CNFs @ CNTs is preferably higher than about 150 m²/g, preferably higher than about 250 m²/g and still more preferably higher than about 350 m²/g up to 1200 m²/g.

Surprisingly, it has been found that the CNFs @ CNTs products possess a higher porosity compared to that of pristine CNTs and other modified CNTs, such as CTITs. In a preferred embodiment the pore volume of the CNFs @ CNTs is higher than 0.5 cm³g⁻¹ and more preferably of about from 0.6 to 2.0 cm³g⁻¹.

A further aspect of the present invention is a carbon nanotube encapsulated carbon nanofibers nanostructure material obtainable by the method as described above.

A still further aspect of the present invention is a carbon nanotube encapsulated carbon nanofiber nanostructure material, wherein the carbon nanofibers inside the channel of the carbon nanotube have a crimped shape.

The carbon nanotube encapsulated carbon nanofibers are preferably characterised by a CNF/CNT weight ratio of about 10 to 60% by weight preferably of about 15 to 30%.

Surprisingly, it has been found that the CNFs @ CNTs products possess a higher porosity compared to that of pristine CNTs and other modified CNTs, such as CTITs. The pore volume of the CNFs @ CNTs is preferably higher than 0.5 cm³g⁻¹ and more preferably of about from 0.6 to 2.0 cm³g⁻¹. Thus the pore volume of the CNFs @ CNTs is preferably increased by at least 200%, preferably by about 300% and more preferably by about 400% compared to that of pristine carbon nanotubes.

In a preferred embodiment the specific surface area of the CNFs @ CNTs is higher than about 150 m²/g, preferably higher than about 250 m²/g and still more preferably higher than about 350 m²/g up to about 1200 m²/g. Thus, the specific surface area of the CNFs @ CNTs is increased by at least 120%, preferably by at least 400% compared to that of pristine CNTs.

In a further embodiment at least 10%, preferably 15-90% and more preferably 20 to 70% by volume of the volume of the inner channel of the CNT may be occupied by carbon nanofibers.

Any above-mentioned properties of the CNFs @ CNTs obtained by the inventive method can also be transferred to the inventive carbon nanotube encapsulated carbon nanofibers nanostructure materials.

Due to the improved spatial utilization of the hollow channels compared to known carbon nanotube materials, it is expected carbon nanotube encapsulated carbon nanofibers to have reasonably potential applications in many important fields, e.g. as energy storage material, hydrogen storage material, electrode material, e.g. in Li-ion batteries, supercapacity material, as reinforcing or conductive additive in composite materials, as catalyst support and as filter material, e.g. waste water treatment for environmental protections.

In a preferred embodiment CNFs @ CNTs are used as elecrode materials. Therefor, CNFs @ CNTs are formed to any suitable elecrode shape. In a preferred embodiment the CNFs @ CNTs nanostructure material is compressed using conventional press molds. Optionally, the CNFs @ CNTs nanostructure material is combined with any suitable binder material. The binder material comprises any electrochemically resistant material, such as poly(vinyldifluoride) (PVDF). In another embodiment the electrode is formed by applying a mixture of CNFs @ CNTs nanostructure material and binder material to a conductive substrate, such as a metal substrate.

In one embodiment, the obtained CNFs @ CNTs electrode materials are used as a negative electrode in Li-ion batteries.

The electrolyte used in combination with the inventive electrode is a Li-ion containing salt, e.g. LiPF₆ or LiClO₄, that is soluble in any elecrochemically stable organic solvents, e.g. ethylene carbonate (EC) or propylenecarbonate (PC). The counter electrode comprises any material suitable in Li-ion batteries, for example Lithium, LiₓMn₂O₄, LiₓNiO₂, LiₓCoO₂, wherein x is 0 to 3.

Surprisingly, it has been found that use of CNFs @ CNTs in Li-ion battery electrodes improves the reversible capacity by at least 5% and cyclability by at least 5% compared to pristine CNT electrodes.

The formation of CNFs inside the CNT channels results in a greatly improved spatial utilization of the inner hollow channel of CNTs and thus improved specific density. The CNFs @ CNTs with a higher spatial utilization have an outstanding reversible volumetric capacity and long-time stability. The contribution to the porosity mainly comes from the secondary pores between CNFs and CNTs or from extremely stacking of CNFs inside CNTs because only the produced CNFs can not contribute to such a great extent (D. S. Su et al, Adv. Mater. 2007, to be published)

A further aspect of the present invention is a Lithium-ion battery comprising a negative electrode comprising CNFs @ CNTs nanostructure material, an positive electrode and a Li-containing liquid electrolyte.

In another preferred embodiment, CNFs @ CNTs electrode materials are used in supercapacitors exhibiting a capacity of 70 F/g.

The method according to the invention provides a template-free synthesis of carbon nanotube-encapsulated carbon nanofibers (i.e. CNFs @ CNTs), by which cheap and low-quality commercial CNTs are modified into high-performance electrode materials. Compared with SWNTs, the CNTs used here have a lower surface area (82 m²g⁻¹), bigger outer diameter (50-200 nm) and thicker walls (50-100 walls). Large-scale production makes their price as low as 50 USD per kilogram.

The CNFs @ CNTs exhibit an outstanding reversible capacity, cyclability and specific capacitance when used as an anode in lithium-based batteries and as an electrode material in supercapacitors, respectively.

This method is extremely attractive because of the low price of feedstock, easy operation and high performance of CNFs @ CNTs.

### Figure legends:

- Fig. 1: Sectional drawing of the synthesis route to CNFs @ CNTs.
- Fig. 2: TEM images of 0.5% Co@CNTs after H₂ reduction. (A-B) Brightfield HRTEM images; (C-E) Dark-field STEM images.
- Fig. 3: Morphologies of pristine CNTs and CNFs @ CNTs. (A) SEM image of fresh CNTs. (B) SEM image of CNFs @ CNTs. (C) HRTEM image of CNFs @ CNTs. (D) HRTEM image of typical synthesized CNFs. TEM images of the CNFs @ CNTs on the sample holder tilted at angles of: (E) -30°; (F) 0°; (G) 30°.
- Fig. 4: N₂ adsorption isotherms and pore size distributions of 0.5% Co/CNT and CNFs @ CNTs.
- Fig. 5: Powder XRD and Raman spectra of 0.5% Co/CNT and CNFs @ CNTs.

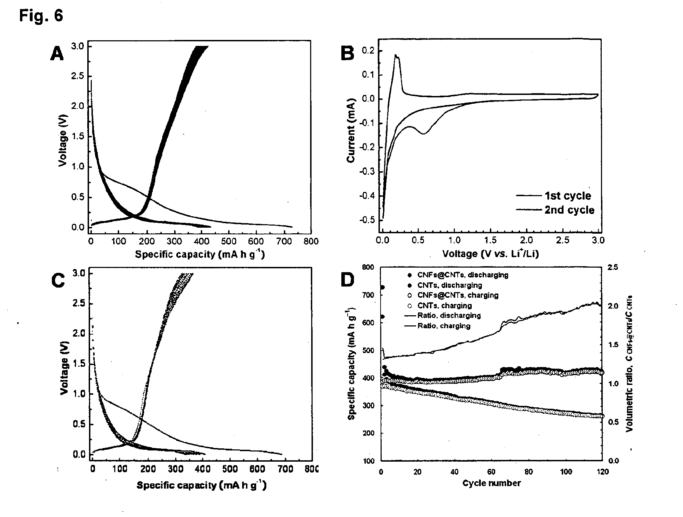

- Fig. 6: Performance of carbon samples in Li electrochemical lithiation and delithiation tests. (A) Galvanostatic discharge (Li insertion, voltage decreases)/charge (Li extraction, voltage increases) curves of CNFs @ CNTs that cycled at a rate of C/5 in 1 M LiPF₆ in EC/DMC solution. (B) Cyclic voltammogram at a scan rate of 0.1 mV s⁻¹ in the voltage range of 0.01 and 3 V in 1 M LiPF₆ in EC/DMC solution. (C) Galvanostatic discharge / charge curves that cycled at a rate of C/5 in 1 M LiClO₄ in PC solution. (D) Comparison of electrochemical performance of pristine CNTs and CNFs @ CNTs in 1 M LiPF₆ in EC/DMC solution.
- Fig. 7: Electrochemical stability of CNFs @ CNTs in 1 M LiPF₆ in EC/DMC solution at 1 C after 120 cycles at C/5 in Fig. 6C.
- Fig. 8: Performance of carbon samples in supercapacitor tests. (A) Cyclic voltammograms of CNFs @ CNTs electrode at different scan rates in 1.0 M H₂SO₄ solution. (B) Galvanastatic discharge/charge curves cycled at current densities of 370 (solid line) and 740 (dot line) mA g⁻¹. (C) Relationship between specific capacity and current density.

### Examples

### Preparation of CNFs @ CNTs

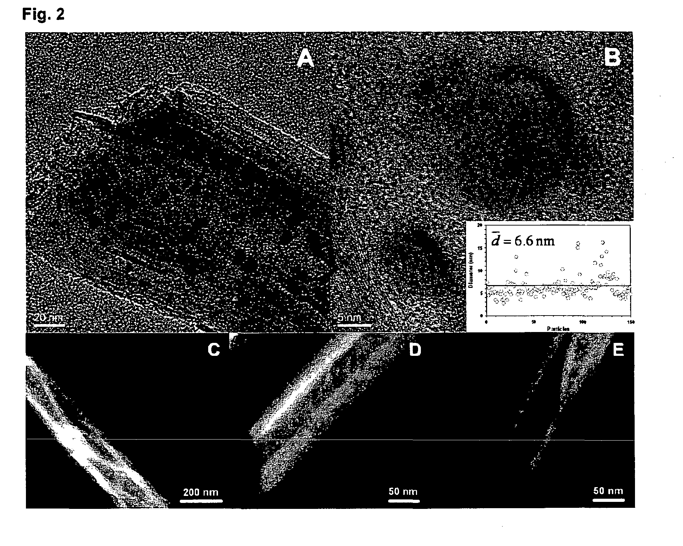

0.5 g commercial carbon nanotubes (PR-24-HHT, Applied Sciences, Inc., inner diameter: 20-80 nm) were refluxed in concentrated nitric acid at 130°C for 10 h and following dried at 100°C overnight. 0.5 wt% Co were deposited inside of the functionalized CNTs via a modified incipient wetness impregnation process, by which 2 ml solution (water/ethanol = 90:10) of cobalt nitrate (4 ml solution per g CNT) was filled into the channel of host CNTs driven by capillary forces. The obtained materials were dried at 100°C for 10 h, calcined at 350°C for 2 h in air, and then reduced at 400°C in a H₂ flow. Metallic cobalt nanoparticles with average size of 6.6 nm were deposited on the channel wall of the CNTs (Fig. 2).

The obtained 0.5% Co/CNTs were heated in a 400 ml heating chamber in flowing H₂:He (volume ratio 1:2; 30 ml/min) to 700 °C. A mixture of C₂H₄:H₂:He (volume ratio 1:1:2; 40 ml min⁻¹) was introduced to the catalyst bed. The CCVD process was maintained for 20 min and then temperature was cooled down to room temperature in He.

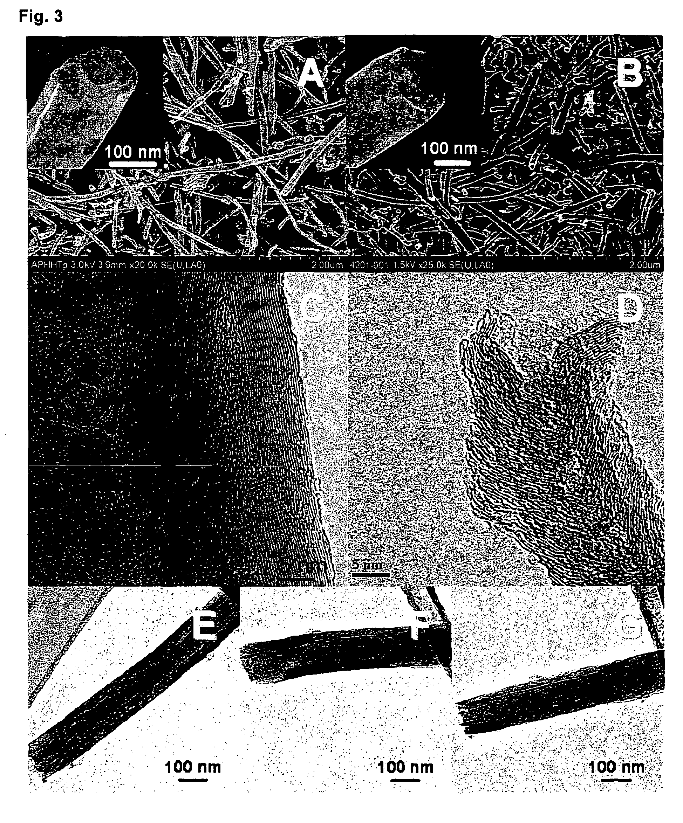

Fig. 3 gives the morphologies of fresh commercial CNTs and synthesized CNFs @ CNTs. No noticeable difference in the external appearance between pristine CNTs and CNFs @ CNTs can be identified by SEM technique, indicating a good confinement of synthesized CNFs by the encapsulating CNTs. High-resolution SEM images of some upward open ends reveal the nanotube channels to be filled with small CNFs (insert to Fig. 3B). As can be seen in TEM images in Figs. 3C and 3D, the typical synthesized CNFs are of open characteristic, around 10 nm in outer diameter and 0.2 µm in length. Tilting the specimen by 30°-steps (Figs. 3E-F) proves a good confinement of CNFs, which mainly benefit from the success in preferential deposition of active metal nanoparticles on the inner walls. Most nanotubes with open ends are filled with small CNFs. There is a small quantity of nanotubes with bamboo like morphologies. Completely closed CNTs are hollow due to the absence of Co nanoparticles in the inner of the channel.

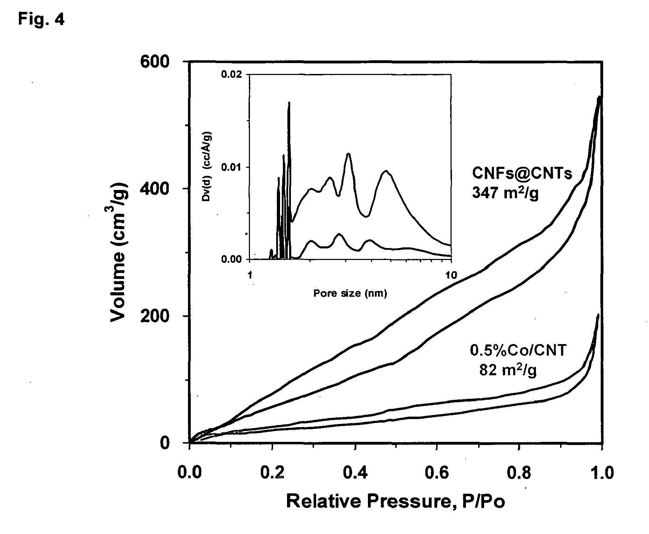

As can be seen from N₂ physisorption tests CNFs @ CNTs possess a higher porosity than the pristine CNTs (Fig. 4). Here the specific area and pore volume increased from 82 m² g⁻¹ and 0.17 cm³ g⁻¹ in case of pristine CNTs to 347 m² g⁻¹ and 0.61 cm³ g⁻¹ for CNFs @ CNTs, respectively.

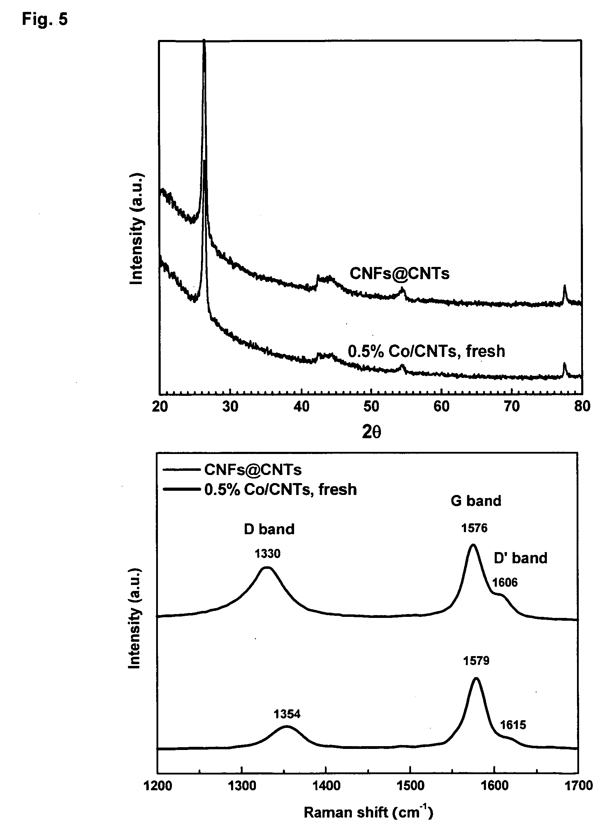

The increase in weight is 25% after the CCVD process, suggesting a greatly improved spatial utilization and bulk density, accordingly, inside the hollow channel of thick CNTs. As revealed by XRD and Raman results (Fig. 5), the fresh CNTs modified with 0.5% Co showed D and G bands at 1354 and 1579 cm⁻¹, respectively, close to the theoretical position of graphite. Such a highly ordered structure arises from the fact that the commercial CNTs are treated at around 2700°C in the factory. After CCVD process, the G and D' bands remained almost unchanged while the D band shifted downwards from 1354 to 1330 cm⁻¹, respectively. The slight increase in ratio of the D-band and G-band intensities reveals only a little amount of disordered carbon to be present in CNFs @ CNTs. Thus, the weight increase after CCVD is substantially equal to the amount of CNFs formed.

Nitrogen sorption isotherms and textural properties were determined at -196 °C on a Quantachrome Autosorb automated gas sorption system. The surface area was calculated using the BET method and total pore volume was determined from the amount of the nitrogen adsorbed at P/P₀ ≈ 0.99. Micro-Raman spectra were recorded on a Jobin Yvon LabRam spectrometer using a 632.8 nm excitation laser line. SEM images were recorded using a Hitachi S4800 scanning electron microscope. TEM and STEM images were recorded on a Philips CM200 FEG and a CM200 LaB₆ transmission electron microscope operating at 200 kV. XRD and Raman spectra were recorded on a Philips PW3710 X'PERT diffractometer with Cu K_{α} radiation and a Dilor Z-24 spectrometer with a coherent Innova-100 Ar ion laser with A = 514.5 nm as exciting source, respectively.

Lithium intercalation / deintercalation tests were carried out in two-electrode Swagelok™-type cells. The working electrodes were prepared by mixing the carbon sample with poly(vinyldifluoride) (PVDF) by a weight ratio of 90:10 and pasting on pure Cu foil (99.6%, Goodfellow). Glass fiber (D, Whatman^{®}) and pure lithium foil (Aldrich) serve as separator and counter electrode, respectively.

The electrolyte consists of a solution of 1 M LiPF₆ in ethylene carbonate (EC) /dimethyl carbonate (DMC) (volume ratio 1:1) obtained from Ube Industries Ltd or a solution of 1 M LiClO₄ in propylene carbonate (PC). The cells were assembled in an argon-filled glove box.

Electrochemical performances were tested at different current densities in the voltage range of 0.01-3 V on an Arbin MSTAT battery test system. Cyclic voltammogram measurements were performed on VoltaLab^{®} 80 electrochemical workstation at a scan rate of 0.1 mV s⁻¹.

Fig. 6A shows the discharge (Li insertion)/charge (Li extraction) curves of a CNFs @ CNTs electrode cycled in 1 M LiPF₆ ethylene carbonate (EC)/dimethyl carbonate (DMC) (volume ratio 1:1) electrolyte at a rate of C/5 (one lithium per six formula units (LiC₆) in 5 hours). In both discharge and charge curves extended flat plateaus can be observed. Additionally, the clear reduction peaks and oxidation peaks, corresponding to Li intercalation/deintercalation into graphene layers, can be identified in the cyclic voltammogram curve (Fig. 6B). The sloped regions in the discharge/charge curves can be ascribed to the Li insertion/deinsertion into disordered structure of CNFs @ CNTs. A large irreversible capacity in the first discharge and charge process is most likely due to the formation of a solid electrolyte interphase (SEI), as corroborated by the disappearance of a reduction peak at around 0.6 V in the second cycle. Unlikely ethylene carbonate, propylene carbonate (PC) is considered as a safe and low-temperature electrolyte. However, the PC solvent and the solvated Li⁺ ions tend to co-intercalate into graphite accompanied by severe exfoliation of graphite layers and thus destruction of the graphite structure.

Very noteworthy is the excellent cycling performance at a rate of C/5 in a PC-based electrolyte displayed by Fig. 6C.

In the terms of stability of the high lithium storage capacity CNFs @ CNTs is superior to pristine CNTs. During 120 cycles, the reversible capacity of CNFs @ CNTs stayed at around 410 mA h g⁻¹ while that of CNTs gradually decreased to 258 mA h g⁻¹ (Fig. 6D).

Furthermore, the volumetric ratio of C_{rev,CNFs @ CNTs} to C_{rev,CNTs} reaches a value as high as 2.02, in which the 25% of increase in bulk density was taken into account. Herein, the volumetric ratio of reversible capacity (mAhcm⁻³) is calculated after normalizing reversible capacity (Cᵣₑᵥ, mAhg⁻¹) to the bulk density (ρ, gcm⁻³), i.e. C_{rev,A ρ A}/C_{rev,B ρ B}, while ρ _{CNFs @ CNTs} = 1.25 ρ_{CNTs}.

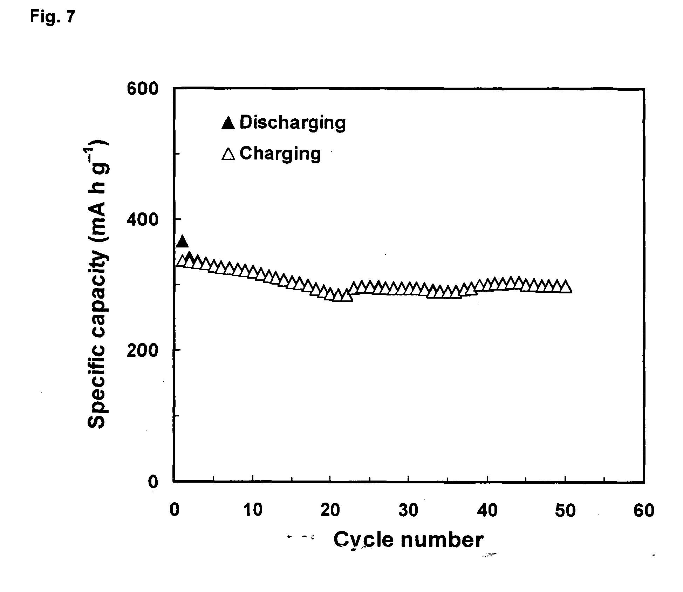

CNFs @ CNTs also possess a high rate capability. When the discharge/charge rate was enhanced from C/5 to 1 C, the reversible capacity still remained higher than 300 mA h g⁻¹ over 50 cycles (Fig. 7). The superior stability of CNFs @ CNTs to pristine CNTs might mainly arise from the steric hindrance effect of compact structure to suppress the diffusion of big electrolyte molecules over the defected walls. The outstanding cycling performance with high storage capacity makes CNFs @ CNTs much more attractive than other carbon materials (e.g. MWNTs, hard carbon or CNFs) reported in literature.

### CNFs @ CNTs as supercapacitor materials

Supercapacitive performance was evaluated with a three-electrode configuration, in which a platinum foil, saturated calomel electrode (SCE) and sample electrode were used as counter, reference and working electrodes, respectively.

The electrolyte (1.0 M H₂SO₄ aqueous solution) was purged with Argon gas for 10 min prior to electrochemical measurements. Cyclic voltammogram and galvanostatic charge / discharge tests were carried out on a Solartron SI 1287 electrochemical interface.

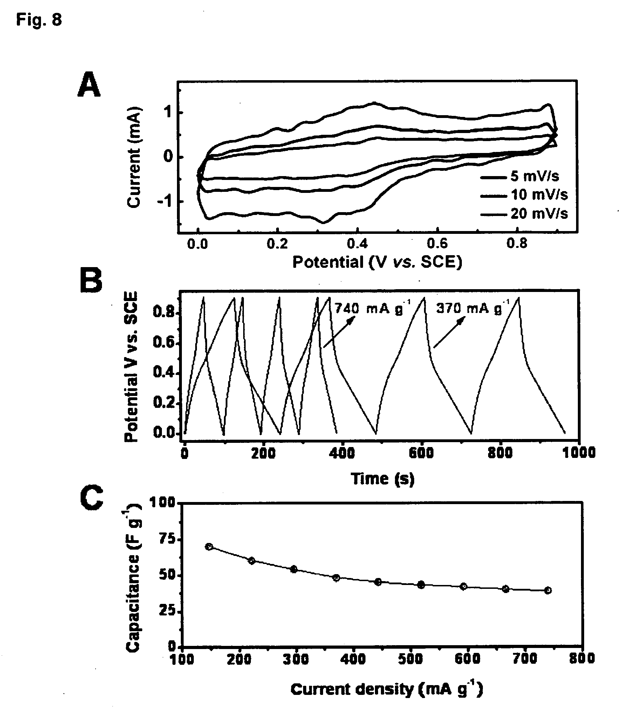

CNFs @ CNTs also show a satisfactory supercapacitive performance. The typical cyclovoltagramms recorded at different scan rates in 1.0 M H₂SO₄ solution are presented in Figure 8A. A couple of weak peaks at 0.3-0.4 V and 0.4-0.5 V arose from the reduction and oxidation of the surface groups on CNFs @ CNTs, respectively. To determine the specific capacitance, galvanostatic discharge/charge measurements were carried out at different current densities, whose results are shown in Figs. 8B and 8C. The specific capacitance is ca. 70 F g⁻¹ at a current density of 148 mA g⁻¹. At higher current densities of 370 and 740 mA g⁻¹, capacitance values of ca. 48 and 40 F g⁻¹ are obtained.

The method according to the invention provides a template-free synthesis of carbon nanotube-encapsulated carbon nanofibers (i.e. CNFs @ CNTs), by which cheap and low-quality commercial CNTs are modified into high-performance electrode materials. Compared with SWNTs, the CNTs used here have a lower surface area (82 m² g⁻¹), bigger outer diameter (50-200 nm) and thicker walls (50-100 walls). Large-scale production makes their price as low as 50 USD per kilogram.

The CNFs @ CNTs exhibit a reversible capacity of 410 mA h g⁻¹ over 120 charge/discharge cycles and a specific capacitance as high as 70 F g⁻¹ when used as an anode in lithium-based batteries and as an electrode material in supercapacitors, respectively.

### Conclusion

The method of the present invention provides a simple route to modify cheap commercial CNTs into highly efficient carbon for electrochemical energy storage. In this synthesis route to CNFs @ CNTs, the feedstock is cheap and each operation is well-established and easy to be industrialized. CNFs @ CNTs with a higher spatial utilization displayed a reversible volumetric capacity two times of pristine CNTs and an outstanding long-time stability.

CNFs @ CNTs are also proved to be a good electrode material in supercapacitors. Due to their unique structural properties CNFs @ CNTs represent a new class of carbon hybrid materials with significant potential for applications in the fields of gas adsorption, environmental protection, waste water treatment, fuel cells, catalysis, hydrogen storage, etc.

## Claims

1. A method for producing carbon nanotube encapsulated carbon nanofibers nanostructure material comprising the steps:
a) providing a carbon nanotube (CNT) starting material,
b) optionally subjecting the CNT material to a functionalization procedure, wherein a CNT starting material having chemically reactive groups is obtained,
c) depositing at least one catalytically active substance in the interior of the CNT material from step a) or b), wherein a catalyst-modified CNT material is obtained,
d) contacting the catalyst-modified CNTs from step c) with at least one carbon-containing compound, wherein carbon nanofibers are formed in the interior of the CNT material,
e) optionally subjecting the material obtained in step d) to a thermal treatment and
f) optionally purifying the material obtained in step d) or e).

2. The method of claim 1, wherein the CNT starting material comprises nanotubes having an average inner diameter of about 10-150 nm, preferably 20-80 nm.

3. The method of any of claims 1-2, wherein the CNT starting material comprises nanotubes having an average length of about 0.2-50 µm, preferably of about 2-50 µm.

4. The method of any of claims 1-3, wherein the functionalization procedure comprises an oxidation.

5. The method of any one of claims 1-4, wherein the catalytically active substance comprises metals, alloys or metal compounds.

6. The method of claim 5, wherein the metal is selected from iron, cobalt, nickel or their alloys, preferably cobalt.

7. The method of any one of claims 1-6, wherein the catalytically active substance is deposited in an amount of about 0.1 to 5%, preferably of about 0.5% based on the total weight of the CNT starting material.

8. The method of any one of claims 1-7, wherein the catalytically active substance is deposited in form of nanoparticles having a diameter in the range of about 1-10 nm, preferably of about 2-7 nm.

9. The method of any one of claims 1-8, wherein the formation of the carbon nanofibers is conducted via catalytic chemical vapour deposition (CCVD).

10. The method of any one of claims 1-9, wherein the carbon-containing compound is selected from the group consisting of saturated and/or unsaturated optionally substituted hydrocarbons, preferably of ethyne, ethylene, CHCl₃ and/or ethane.

11. The method of any one of claims 1-10, wherein the carbon nanofibers have an average outer diameter of about 2-20 nm, more preferably of about 10 nm.

12. The method of any one of claims 1-11, wherein the length of the carbon nanofiber is of about 100-1000 nm, preferably of about 150-250 nm.

13. The method of any one of claims 1-12, wherein the carbon nanofibers are hollow.

14. The method of any one of claims 1-13, wherein the carbon nanofibers are open and/or closed.

15. The method of any one of claims 1-14, wherein the carbon nanofibers are crimped.

16. The method of any one of claims 1-15, wherein at least about 10%, preferably about 20 to 70% by volume of the volume of the inner channel of the CNT are occupied by carbon nanofibers.

17. The method of any one of claims 1-16, wherein the amount of carbon fibers is from about 10 to 60% by weight based on the total weight of the nanostructure material.

18. The method of any one of claims 1-17, wherein the thermal treatment of step e) comprises heating the nanostrucure material to at least 800°C in an inert atmosphere.

19. The method of any one of claims 1-18, wherein the purification step f) comprises treating the nanostructure materials with an agent suitable for removing the catalytically active substances of step c).

20. Carbon nanotube encapsulated carbon nanofibers obtainable by the method of any one of claims 1-19.

21. Carbon nanotube encapsulated carbon nanofibers, wherein the carbon nanofibers are crimped.

22. The carbon nanotube encapsulated carbon nanofibers of any one of claims 20 or 21, wherein the carbon nanofibers have an average outer diameter of about 2-20 nm, more preferably of about 10 nm.

23. The carbon nanotube encapsulated carbon nanofibers of any one of claims 20-22, wherein the length of the carbon nanofiber is of about 100-1000 nm, preferably of about 150-250 nm.

24. The carbon nanotube encapsulated carbon nanofibers of any one of claims 20-23, wherein the carbon nanofibers are hollow.

25. The carbon nanotube encapsulated carbon nanofibers of any one of claims 20-24, wherein at least about 10%, preferably 20 to 70% by volume of the volume of the inner channel of the CNT are occupied by carbon nanofibers.

26. The carbon nanotube encapsulated carbon nanofibers of any one of claims 20-25, wherein the amount of carbon fibers is from about 10 to 60% by weight based on the total weight of the nanostructure material.

27. The carbon nanotube encapsulated carbon nanofibers of any one of claims 20-26, wherein the specific surface area is increased by about at least 120%, preferably by about at least 400% compared to that of pristine CNTs.

28. The carbon nanotube encapsulated carbon nanofibers of any one of claims 20-27, wherein the pore volume is increased by about at least about 300% compared to that of pristine CNTs, preferably by about at least 400%.

29. Use of carbon nanotubes encapsulated carbon nanofibers of any one of claims 20-28 as energy storage material.

30. Use of carbon nanotubes encapsulated carbon nanofibers of any of claims 20-28 as electrode material.

31. Use of carbon nanotubes encapsulated carbon nanofibers of claim 30 as negative electrode in Li-ion batteries.

32. Use according to 31, wherein the reversible volumetric capacity of the Li-ion battery negative electrode is increased by at least 5% compared to pristine CNT electrodes.

33. Use of carbon nanotubes encapsulated carbon nanofibers of any one of claims 20-28 as electrode in supercapacitors.

34. Use of carbon nanotubes encapsulated carbon nanofibers of any one of claims 20-28 as an additive in composite materials.

35. Use of carbon nanotubes encapsulated carbon nanofibers of any one of claims 20-28 as hydrogen storage material.

36. Use of carbon nanotubes encapsulated carbon nanofibers of any one of claims 20-28 as catalyst support.

37. Use of carbon nanotubes encapsulated carbon nanofibers of any one of claims 20-28 as filter material.

38. A Lithium-ion battery comprising a negative electrode comprising CNFs @ CNTs nanostructure material, an positive electrode and a Li-containing liquid electrolyte.
